# EUROPEAN PATENT SPECIFICATION

(11) **EP 1 955 752 B1**
(45) Date of publication and mention of the grant of the patent: **08.10.2014**
(21) Application number: 08151071.1
(22) Date of filing: 05.02.2008
(51) Int. Cl.: B01D 46/00, B01D 35/30, F28F 19/01

(54) **Filter unit for a heat exchanger**
Filtereinheit für Wärmetauscher
Unité filtrante pour échangeur de chaleur

(30) Priority: 07.02.2007 IT UD20070024
(43) Date of publication of application: 13.08.2008
(73) Proprietor: Officine Meccaniche Industriali SRL Con Unico Socio, 34070 Fogliano Redipuglia (GO) (IT)
(72) Inventor: Capellari, Giovanni Battista, 33100, Udine (IT); Massaro, Fabio, 37100, Verona (IT); Trombin, Filippo, 37100, Verona (IT)
(74) Representative: Petraz, Gilberto Luigi

(56) References cited:
- WO-A-02/074422
- WO-A1-02/052215
- DE-A1- 3 909 402
- US-A- 2 402 140
- US-A- 5 281 331
- US-A1- 2005 188 848
- US-B1- 6 576 129

## Description

### FIELD OF THE INVENTION

The present invention concerns a system for heat exchanging with a compact geometry, comprising a heat exchanger and at least filter unit.

### BACKGROUND OF THE INVENTION

Heat exchangers with compact geometry are known, usable in plants for conditioning and/or drying compressed air in which, due to specific requirements of installation and positioning, the overall bulk of the plant must be reduced to a minimum, or in any case must respect limits of size.

It is also known that such heat exchangers are sometimes provided externally with a filter unit having one or more filters connected to a delivery and/or outlet pipe for the heat exchanger, so as to filter the compressed air and/or after the heat exchange.

The filters are normally disposed outside the heat exchanger and are connected to the delivery and/or outlet pipe of the compressed air, by means of one or more linear connections, known also as nipples, so as to ensure the hydraulic seal of the coupling.

It is also known that, according to the type of filter adopted, the filter unit can be connected to a lower surface of the exchanger or a lateral surface thereof.

In any case, known linear connections, since they are interposed substantially between the filters and the heat exchanger, determine an increase of the bulk in height, or lateral, of the exchanger-filters combined. The increase in bulk, although minimal, can in some cases be excessive for the correct installation of the plant.

Purpose of the present invention is to achieve a system for heat exchanging comprising a heat exchanger and at least a filter unit which allows to reduce to a minimum the overall bulk of installation, also in terms of accessibility, taking into consideration the space necessary for removal and installation.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purpose, a system for heat exchanging according to the present invention comprises a heat exchanger having a wall on which a delivery and/or outlet pip is disposed, and at least a filter able to be mounted upstream and/or downstream of said delivery and/or outlet pipe of said wall. The filter is provided with filter means contained in a seating made in a containing body which has passage ways that put said seating into communication with said delivery and/or outlet pipe.

According to a characteristic feature of the present invention, the containing body comprises first attachment means, and a second attachment means is provided, made directly on said wall, mating with the first attachment means and cooperating therewith in order to mount the filter directly on the wall, so that during use said passage ways are adjacent and in close proximity to the wall of the heat exchanger.

The filter unit according to the present invention is therefore extremely compact and of limited size, so that overall it allows to reduce to a minimum the overall bulk of installation and removal of the heat exchanger.

A first form not according to the present invention provides that the filter is mounted directly on a vertical wall of the heat exchanger, and is thus disposed laterally with respect to it.

A second form of embodiment of the present invention provides that the filter is mounted directly on a horizontal wall, advantageously a lower horizontal wall of the exchanger, and is thus disposed below the latter.

One advantage of the present invention is that, according to the limitations of size of the place where the filter and the relative exchanger are to be installed, it is possible to choose in advance the above form of embodiment of the filter unit according to the invention.

In particular, the present invention is advantageously applied on horizontal heat exchangers, even though the inventive concept on which the present invention is based is also applicable to vertical heat exchangers or heat exchangers of other types.

These and other characteristics of the present invention will become apparent from the following description of a preferential form of embodiment, given as a non-restrictive example with reference to the attached drawings wherein:
- fig. 1 is a perspective view of a filter unit , associated with a heat exchanger;
- fig. 2 is a perspective view, with separate parts, of the filter unit in fig. 1;
- fig. 3 is a front view of the filter unit in fig. 1;
- fig. 4 is a lateral section of the filter unit in fig. 1;
- fig. 5 is a perspective view of an embodiment of a filter unit according to the present invention, associated with a heat exchanger;
- fig. 6 is a perspective view, with separate parts, of the filter unit in fig. 5;
- fig. 7 is a lateral section of the filter unit in fig. 5; and
- fig. 8 is a front view of the filter unit in fig. 5.

### DETAILED DESCRIPTION OF A PREFERENTIAL FORM OF EMBODIMENT

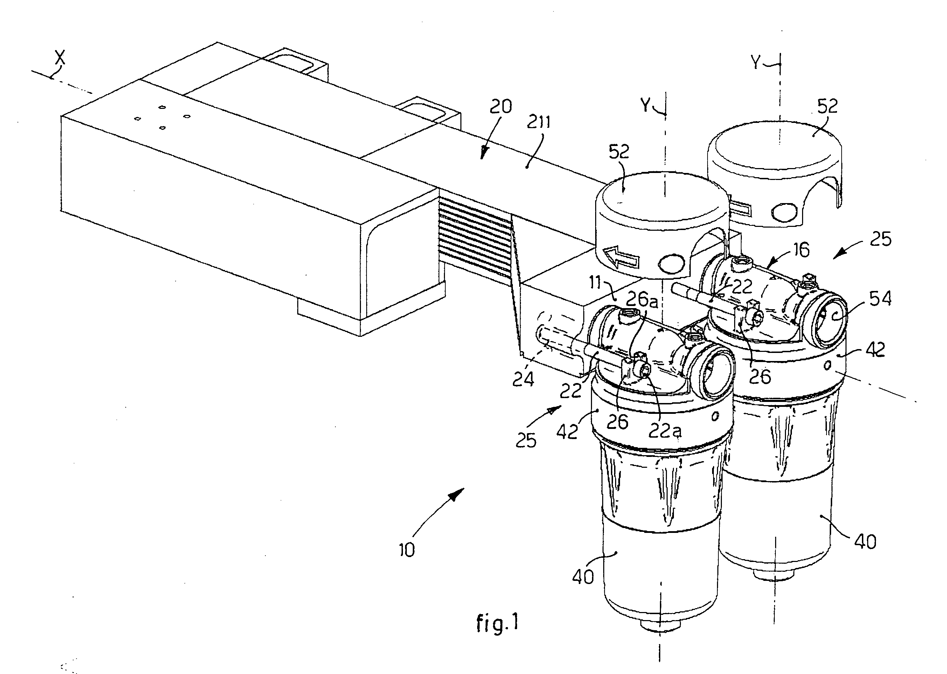

With reference to fig. 1, a filter unit 10 not according to the present invention is able to be associated with a heat exchanger 20 that develops along a longitudinal axis X disposed horizontally, and delimited laterally by two vertical walls 11, respectively left and right, by two other vertical walls on the front and back, aligned with the longitudinal axis X and, finally, by two horizontal walls, lower 111 and upper 211.

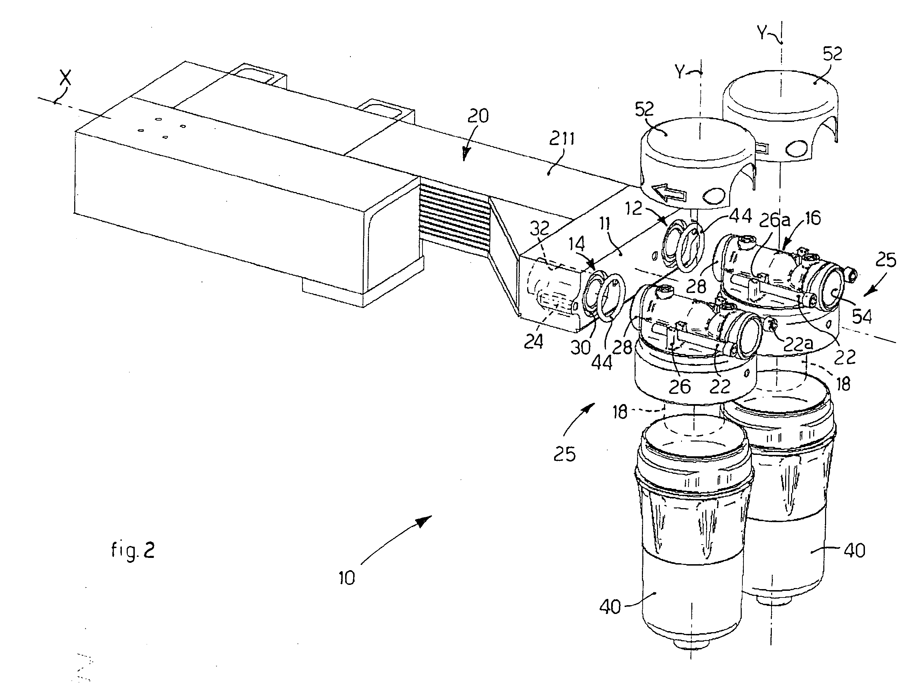

In particular, the filter unit 10 is mounted by means of a flange type mount on the right vertical wall 11 of the heat exchanger 20, respectively upstream and downstream of a delivery pipe 12 and an outlet pipe 14 disposed on the wall 11 and aligned with the longitudinal axis X (fig. 2).

The filter unit 10 comprises two filters 25, of the same type, which develop along an axis Y orthogonal to the axis X, and which are disposed in pairs, one in correspondence with the delivery 12 and the other in correspondence with the outlet 14.

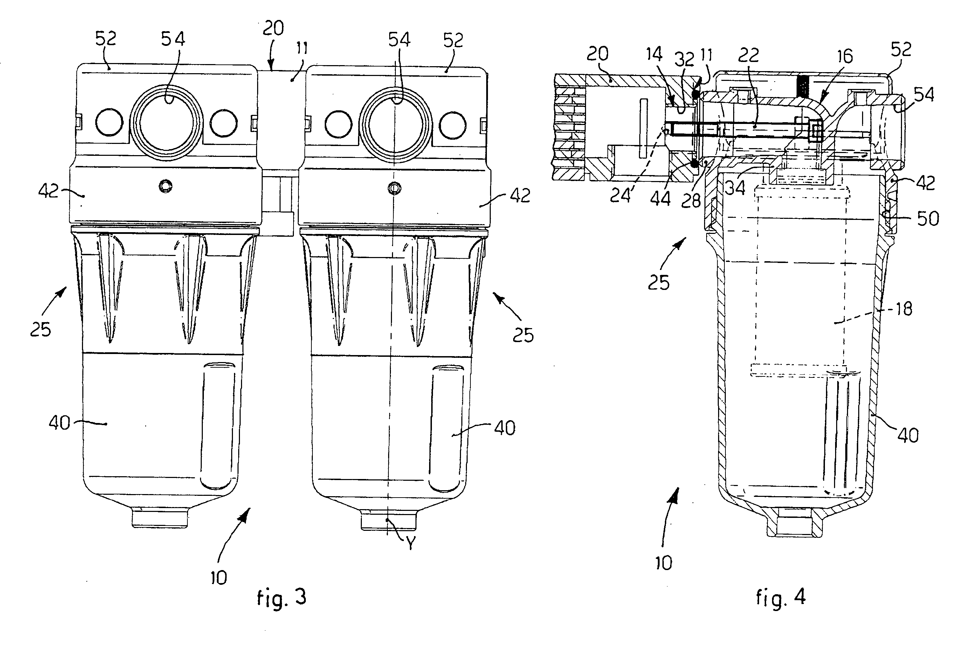

Each filter 25 has a containing body 16, provided inside a seating 50 (fig. 4) in which a filter device 18 is housed, substantially cylindrical in shape (figs. 2 and 4). The containing body 16 is provided, in its seating 50, with a tubular portion 34 of the threaded type, to which the filter device 18 is solidly attached by means of screwing or with a bayonet type attachment system (fig. 4).

The containing body 16 is closed at the bottom by a threaded stopper 40, which is screwed on a flange 42 with a vertical axis. The stopper 40 and the containing body 16 delimit overall the seating 50, of a size suitable to contain the filter device 18 (fig. 4). An upper cover 52 is also provided, with a covering and aesthetic function.

The containing body 16 has both a pipe 54 (figs. 2, 3 and 4) which according to whether the filter 25 is connected to the delivery 12 or the outlet 14, functions as an inlet or outlet for the air, and also a tubular portion 28 which functions respectively as an outlet or inlet of the filter 25, aligned with the longitudinal axis X and provided in a position opposite the pipe 54 (figs. 2 and 4).

The containing body 16 is inserted, by means of its tubular portion 28, into a suitable circular cavity 30, made on the wall 11, in correspondence with the terminal part 32 of the delivery 12 and/or the outlet 14. An O-ring packing 44 is interposed between the cavity 30 and the tubular portion 28, to obtain the necessary hydraulic seal (figs. 2 and 4).

The filter 25 is provided with attachment screws 22, normally disposed horizontally outside the containing body 16, which cooperate with relative attachment seatings 24 made, with a horizontal development, on the wall 11 (figs. 1, 2 and 4). On the outside of the containing body 16 brackets 26 are made in a single piece, having seatings 26a which function as a housing and supporting element in order to keep the attachment screws 22 horizontal, and the surface 26a of which functions as an abutment for the relative nut 22a of the attachment screws 22.

The attachment screws 22 substantially function as tie rods, acting along the longitudinal axis X, in order to keep the containing body 16 inserted in the relative cavity and, all in all, to determine the attachment of the filter 25 to the wall 11.

By means of this type of direct attachment to the vertical wall 11, during use the filter 25 is disposed completely outside the plane perimeter of the heat exchanger 20, that is, lateral to its bulk.

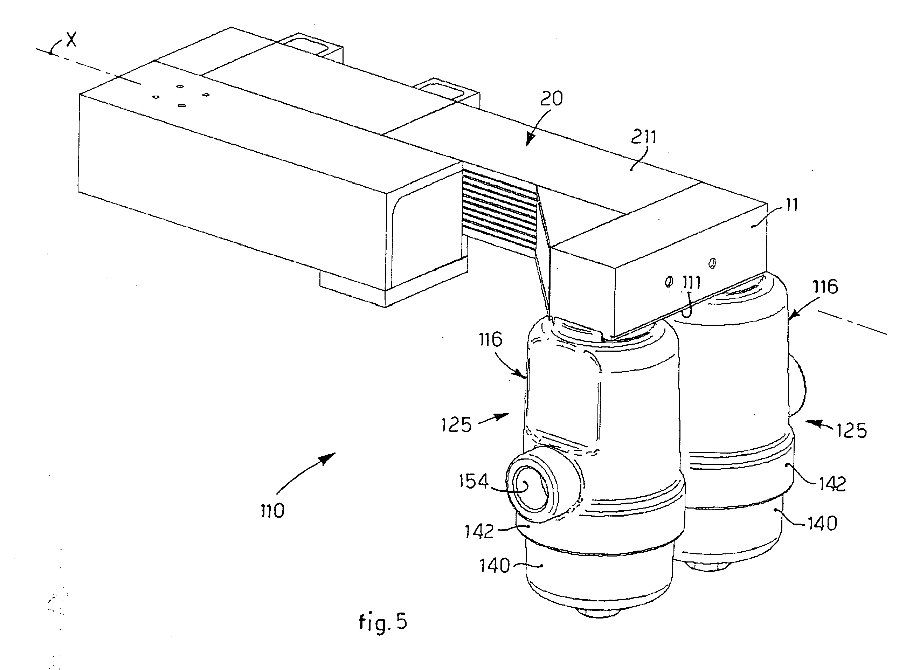

With reference to figs. 5, 6, 7 and 8, a form of embodiment of the filter unit according to the present invention is indicated by the reference number 110. The filter unit 110 is able to be mounted directly on the lower horizontal wall 111 of said heat exchanger 20, in correspondence with the delivery 12 and the outlet 14.

The filter unit 110 comprises two filters 125, of the same type, aligned with an axis Y orthogonal to the longitudinal axis X and disposed in pairs, in correspondence with the delivery 12 and the outlet 14.

Each filter 125 has a containing body 116, provided inside a seating 150, in which a filter device 118 is housed, substantially cylindrical in shape. The containing body 116 is substantially bell-shaped and develops mainly along the axis Y.

The containing body 116 is closed at the bottom by a stopper 140, which is screwed onto a flange 142 with a vertical axis.

The stopper 140 and the containing body 116 delimit overall the seating 150, with sizes suitable to contain the filter device 118.

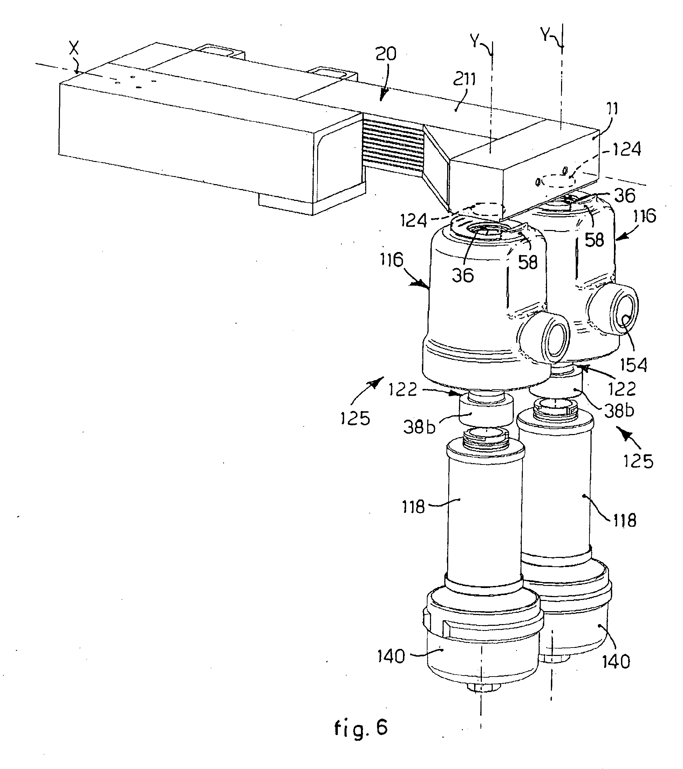

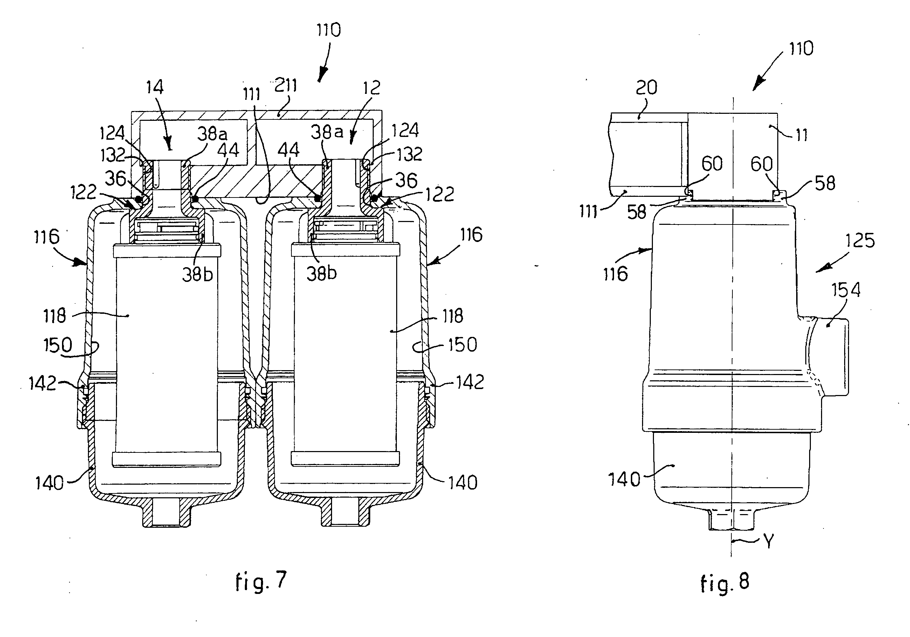

The containing body 116 has a pipe 154 which, according to whether the filter 125 is connected to the delivery 12 or the outlet 14, functions as an inlet or outlet for the air, and also an upper aperture 36 which functions respectively as outlet or inlet of the filter 125 (fig. 6 and 7).

An adaptor connector 122 with a tubular structure is inserted into the upper aperture 36, to connect with the heat exchanger 20.

In particular, in order to connect the containing body 116 to the wall 111 of the heat exchanger 20, a first tubular portion 38a of the adaptor connector 122, of the threaded type and protruding from the aperture 36, is inserted and screwed into a relative threaded aperture 124 (figs. 6 and 7), coaxial to the axis Y and made on the wall 111 in correspondence with the terminal part 132 of the delivery 12 and the outlet 14.

A second tubular portion 38b of the adaptor connector 122, of the threaded type, normally disposed in the seating 150 of the containing body 116, allows to attach the filter device 118 by screwing (figs. 6 and 8).

Attachment fins 58 are made on the upper part of the containing body 116, concentric with the aperture 36, and cooperate with corresponding attachment grooves 60 (fig. 8), made in correspondence with the threaded aperture 124, so as to further attach the containing body 116 to the wall 111.

An O-ring type packing 44 is disposed between the wall 111 and the adaptor connector 122, to obtain the necessary hydraulic seal (fig. 7).

By means of this type of direct attachment to the lower horizontal wall 111, during use the filter 125 is disposed mainly inside the plane perimeter of the heat exchanger 20, and in any case below the latter.

It is clear that modifications and/or additions of parts may be made to the filter unit 10, 110 as described heretofore, without departing from the field and scope of the present invention.

## Claims

1. System for heat exchanging comprising a heat exchanger (20) having a horizontal lower wall (111) and a horizontal upper wall (211), on said horizontal lower wall (111) being disposed a delivery pipe (12) and an outlet pipe (14), said system further comprising at least a filter unit (110) comprising at least a filter (125) able to be mounted upstream and/or downstream of said delivery pipe (12) and/or said outlet pipe (14), said filter (125) being provided with filter means (118) contained in a seating (150) made in a containing body (116) which has passage ways formed by a circular aperture (36) that put said seating (150) in communication with said delivery pipe (12) and/or said outlet pipe (14), **characterized in that** said containing body (116) comprises first attachment means comprising an adaptor connector (122) of the threaded type, inserted into said circular aperture (36) of said containing body (116) and **in that** a second attachment means is provided comprising relative threaded apertures (124), made directly on said horizontal lower wall (111) in correspondence with a terminal part (132) of said delivery pipe (12) and/or said outlet pipe (14), mating with said adaptor connector (122) and cooperating therewith so as to mount said filter (125) directly on said horizontal lower wall (111), so that during use said aperture (36) is adjacent and in close proximity to said horizontal lower wall (111), wherein said adaptor connector (122) is provided with a tubular structure comprising a first tubular portion (38a) of the threaded type protruding from said aperture (36) in order to connect the containing body (116) to the horizontal lower wall (111), said first tubular portion (38a) being inserted and screwed into a relative one of said threaded apertures (124) and said adaptor connector (122) is further provided with a second tubular portion (38b) of the threaded or bayonet type, disposed inside said containing body (116), to which second tubular portion (38b) said filter means (118) is able to be attached.

2. System as in claim 1, **characterized in that** said filter unit (110) is directly mounted on said horizontal lower wall (111) so that during use said at least a filter (125) is mostly disposed inside the plane perimeter of said heat exchanger (20).

3. System as in claim 1 or 2, **characterized in that** said first attachment means also comprises attachment fins (58) made on the upper part of the containing body (116), concentric with the aperture (36) and **in that** said second attachment means also comprises attachment grooves (60) made on said horizontal lower wall (111) and mating with said attachment fins (58), cooperating with them so as to attach said containing body (116) to said horizontal lower wall (111).

4. System as in any claim hereinbefore, **characterized in that** said at least a filter (125) comprises a closing element (140) of the threaded type which cooperates with a relative connection flange (142) of said containing body (116), and functions as a closing stopper.

5. System as in any claim hereinbefore, **characterized in that** the filter unit (110) comprises two filters (125) provided at the horizontal lower wall (111) respectively in correspondence of the delivery pipe (12) and of the outlet pipe (14).

6. System as in any claim hereinbefore, **characterized in that** an O-ring type packing (44) is disposed between the horizontal lower wall (111) and the adaptor connector (122).

## Patentansprüche

1. Anordnung für den Wärmeaustausch, umfassend einen Wärmetauscher (20) mit einer horizontalen unteren Wand (111) und einer horizontalen oberen Wand (211), wobei an der horizontalen unteren Wand (111) ein Förderrohr (1 2) und ein Auslassrohr (14) angeordnet sind, wobei die Anordnung weiter wenigstens eine Filtereinheit (110) umfasst, umfassend wenigstens einen zur Anbringung stromaufwärts und/oder stromabwärts des Förderrohrs (12) und/oder des Auslassrohrs (14) geeigneten Filter (125), wobei der Filter (125) mit einem in einem Sitz (150) enthaltenen Filtermittel (118) versehen ist, welcher Sitz in einem Behälterkörper (116) ausgeführt ist, der durch eine kreisförmige Öffnung (36) gebildete Durchgänge aufweist, die den Sitz (150) mit dem Förderrohr (12) und/oder dem Auslassrohr (14) in Verbindung setzen, **dadurch gekennzeichnet, dass** der Behälterkörper (1 16) ein erstes Befestigungsmittel umfasst, umfassend ein Verbindungszwischenstück (122) vom Gewindetyp, das in die kreisförmige Öffnung (36) des Behälterkörpers (116) eingesetzt ist, und dass ein zweites Befestigungsmittel vorgesehen ist, umfassend zugehörige gewindeversehene Öffnungen (124), direkt ausgeführt an der horizontalen unteren Wand (111) entsprechend einem Anschlussteil (132) des Förderrohrs (12) und/oder des Auslassrohrs (14), zusammenpassend und zusammenwirkend mit dem Verbindungszwischenstück (122), um den Filter (125) direkt an der horizontalen unteren Wand (111) anzubringen, so dass sich die Öffnung (36) während des Gebrauchs benachbart und in unmittelbarer Nähe zu der horizontalen unteren Wand (111) befindet, wobei das Verbindungszwischenstück (122) mit einer röhrenförmigen Struktur versehen ist, umfassend einen ersten rohrförmigen Teil (38a) vom Gewindetyp, der von der Öffnung (36) vorsteht, um den Behälterkörper (116) mit der horizontalen unteren Wand (111) zu verbinden, wobei der erste rohrförmige Teil (38a) in eine zugehörige der gewindeversehenen Öffnungen (124) eingesetzt und eingeschraubt ist und das Verbindungszwischenstück (122) weiter mit einem im Inneren des Behälterkörpers (116) angeordneten zweiten rohrförmigen Abschnitt (38b) vom Gewinde- oder Bajonetttyp versehen ist, an welchem zweiten rohrförmigen Abschnitt (38b) das Filtermittel (1 18) befestigbar ist.

2. Anordnung nach Anspruch 1, **dadurch gekennzeichnet, dass** die Filtereinheit (110) direkt an der horizontalen unteren Wand (111) angebracht ist, so dass sich der wenigstens eine Filter (125) während des Gebrauchs hauptsächlich im Inneren des Umfangs des Wärmetauschers (20) befindet.

3. Anordnung nach Anspruch 1 oder 2, **dadurch gekennzeichnet, dass** das erste Befestigungsmittel auch Befestigungsrippen (58) umfasst, die am oberen Teil des 6Behälterkörpers (1 16) konzentrisch mit der Öffnung (36) ausgeführt sind, und dass das zweite Befestigungsmittel auch an der horizontalen unteren Wand (111) ausgeführte und mit den Befestigungsrippen zusammenpassende Befestigungsrillen (60) umfasst, wobei sie mit ihnen zusammenwirken, um den Behälterkörper (116) an der horizontalen unteren Wand (111) zu befestigen.

4. Anordnung nach einem beliebigen vorhergenden Anspruch, **dadurch gekennzeichnet, dass** der wenigstens eine Filter (125) ein Schließelement (140) vom Gewindetyp umfasst, das mit einem zugehörigen Verbindungsflansch (142) des Behälterkörpers (1 16) zusammenwirkt und als Schließstopfen funktioniert.

5. Anordnung nach einem beliebigen vorhergehenden Anspruch, **dadurch gekennzeichnet, dass** die Filtereinheit (110) zwei Filter (125) umfasst, die an der horizontalen unteren Wand (111) jeweils in Entsprechung mit dem Förderrohr (1 2) und mit dem Auslassrohr (14) vorgesehen sind.

6. Anordnung nach einem beliebigen vorhergehenden Anspruch, **dadurch gekennzeichnet, dass** eine Dichtung vom O-Ring-Typ zwischen der horizontalen unteren Wand (111) und dem Verbindungszwischenstück (1 22) angeordnet ist.

## Revendications

1. Système pour échange de chaleur comprenant un échangeur de chaleur (20) ayant une paroi inférieure horizontale (111) et une paroi supérieure horizontale (211), un tuyau d'alimentation (12) et un tuyau de sortie (14) étant disposés sur ladite paroi inférieure horizontale (111), ledit système comprenant en outre au moins une unité de filtration (110) comprenant au moins un filtre (125) susceptible d'être monté en amont et/ou en aval dudit tuyau d'alimentation (12) et/ou dudit tuyau de sortie (14), ledit filtre (125) étant muni de moyens de filtration (118) contenus dans un logement (150) réalisé dans un corps contenant (116) qui comporte des passages formés par une ouverture circulaire (36), qui mettent ledit logement (150) en communication avec ledit tuyau d'alimentation (12) et/ou ledit tuyau de sortie (14), **caractérisé en ce que** ledit corps contenant (116) comprend des premiers moyens de fixation comprenant un connecteur d'adaptation (122) du type fileté, introduit dans ladite ouverture circulaire (36) dudit corps contenant (116) et **en ce que** des seconds moyens de fixation sont prévus en comprenant des ouvertures taraudées correspondantes (124) formées directement sur ladite paroi inférieure horizontale (111) en correspondance avec une partie terminale (132) dudit tuyau d'alimentation (12) et/ou dudit tuyau de sortie (14), correspondant avec ledit connecteur d'adaptation (122) et coopérant avec lui de façon à monter ledit filtre (125) directement sur ladite paroi inférieure horizontale (111), de sorte que durant l'utilisation, ladite ouverture (36) soit adjacente et à proximité immédiate de ladite paroi inférieure horizontale (111), ledit connecteur d'adaptation (122) étant pourvu d'une structure tubulaire comprenant un premier tronçon tubulaire (38a) du type fileté faisant saillie depuis ladite ouverture (36) afin de relier le corps contenant (116) à la paroi inférieure horizontale (111), ledit premier tronçon tubulaire (38a) étant introduit et vissé dans une ouverture filetée correspondante (124) parmi plusieurs ouvertures filetées (124) et ledit connecteur d'adaptation (122) étant en outre muni d'un second tronçon tubulaire (38b) du type fileté ou à baïonnette, disposé à l'intérieur dudit corps contenant (116), lesdits moyens de filtration (118) étant susceptibles d'être fixés audit second tronçon tubulaire (38b).

2. Système selon la revendication 1, **caractérisé en ce que** ladite unité de filtration (110) est directement montées sur ladite paroi horizontale (111) de sorte que durant l'utilisation, ledit filtre (125) soit disposé principalement à l'intérieur du périmètre plan dudit échangeur de chaleur (20).

3. Système selon la revendication 1 ou 2, **caractérisé en ce que** lesdits premiers moyens de fixation comprennent également des ailettes de fixation (58) formées sur la partie supérieure du corps contenant (116), concentriques avec l'ouverture (36) et **en ce que** lesdits seconds moyens de fixation comprennent également des rainures de fixation (60) réalisées sur ladite paroi inférieure horizontale (111) et correspondant avec lesdites ailettes de fixation (58), coopérant avec elles de manière à fixer ledit corps contenant (116) à ladite paroi inférieure horizontale (111).

4. Système selon l'une quelconque des revendications précédentes, **caractérisé en ce que** ledit filtre (125) comprend un élément de fermeture (140) du type fileté qui coopère avec une bride de connexion correspondante (142) dudit corps contenant (116) et fonctionne comme une butée de fermeture.

5. Système selon l'une ou l'autre des revendications précédentes, **caractérisé en ce que** ladite unité de filtration (110) comprend deux filtres (125) prévus au niveau de la paroi inférieure horizontale (111) respectivement en correspondance avec le tuyau d'alimentation (12) et le tuyau de sortie (14).

6. Système selon l'une quelconque des revendications précédentes, **caractérisé en ce qu'**une garniture du type joint torique (44) est disposée entre la paroi inférieure horizontale (111) et le connecteur d'adaptation (122).
